# EUROPEAN PATENT APPLICATION

(11) **EP 4 654 599 A1**
(43) Date of publication of application: **26.11.2025**
(21) Application number: 25177605.0
(22) Date of filing: 20.05.2025
(51) Int. Cl.: H04N 23/63, H04N 23/661, H04N 23/69, H04N 23/90

(54) **ELECTRONIC DEVICE, CONTROL METHOD OF ELECTRONIC DEVICE, PROGRAM, AND COMPUTER READABLE MEDIUM**

(30) Priority: 24.05.2024 JP 2024084982
(71) Applicant: CANON KABUSHIKI KAISHA, Tokyo 146-8501 (JP)
(72) Inventor: ISE, Toshimichi, Ohta-ku, Tokyo, 146-8501 (JP)
(74) Representative: TBK

(57) **Abstract**

An electronic device acquires a plurality of images, performs control such that a first screen including a first area and a second area smaller than the first area is displayed, performs control such that the plurality of images are simultaneously displayed in the second area and a main image that is one of the plurality of images is displayed in the first area, and selects the main image according to a user operation. In a case where enlarged display is instructed while displaying the first screen, an image of an enlarged area that is a part of the main image is displayed in the first area, an item representing a position of the enlarged area is not displayed in the first area, and the item representing the position of the enlarged area is displayed to be superimposed on the main image displayed in the second area.

## Description

### BACKGROUND OF THE INVENTION

### Field of the Invention

The present invention relates to an electronic device and particularly relates to control when live view images are acquired from a plurality of cameras and the live view images are enlarged and displayed.

### Description of the Related Art

Application software is wirelessly connected to a plurality of cameras and can remotely control the cameras. The application software operates on a remote terminal such as a smartphone, a tablet device, or a personal computer, and is useful when a user wants to remotely control the cameras.

The application software may also have a function of simply switching a camera to be operated by acquiring live view images (LV images) of the plurality of cameras, displaying the live view images on a screen on the remote terminal, and allowing the user to select one of the displayed LV images. The LV image of the camera to be operated may be displayed as an LV image for checking an image quality such as focus, separately from the LV images for switching cameras.

The application software also has an enlargement function of cropping a part of the LV image to check an image quality in detail and enlarging the cropped image. When the enlargement function is used, a guide representing an enlarged area is likely to be displayed. JP H11-338449 A discloses a technique in which an enlarged image obtained by enlarging a part of an LV image is displayed to be superimposed on the part of the LV image and a frame indicating an enlarged area is displayed to be superimposed on the LV image. JP 2009-17121 A discloses a technique of separately displaying an enlarged image and an LV image on the same screen, in which a frame representing an enlarged area is superimposed on the LV image.

### SUMMARY OF THE INVENTION

The present invention provides a technique in which, when a main image that is any one of a plurality of images is displayed separately from the plurality of images, an enlarged area is identifiable while maintaining visibility of the main image that is enlarged and displayed. The plurality of images are a plurality of LV images for switching cameras, and the main image is an LV image for checking an image quality.

The present invention in its first aspect provides an electronic device as specified in claims 1 to 21. The present invention in its second aspect provides a control method as specified in claim 22. The present invention in its third aspect provides a program as specified in claim 23. The present invention in its fourth aspect provides a computer readable medium as specified in claim 24.

Further features of the present invention will become apparent from the following description of exemplary embodiments with reference to the attached drawings.

### BRIEF DESCRIPTION OF THE DRAWINGS

FIG. 1 is a schematic diagram illustrating a configuration example of a system;
FIG. 2A is a block diagram illustrating a configuration example of a camera;
FIG. 2B is a block diagram illustrating a configuration example of the smartphone;
FIGS. 3A to 3C are schematic diagrams illustrating screen examples of a camera control application;
FIGS. 4A to 4C are schematic diagrams illustrating screen examples of the camera control application;
FIGS. 5A to 5C are schematic diagrams illustrating screen examples of the camera control application;
FIGS. 6A to 6C are schematic diagrams illustrating screen examples of the camera control application;
FIG. 7 is a flowchart illustrating an overall operation of the smartphone; and
FIGS. 8A and 8B are schematic diagrams illustrating screen examples of the camera control application.

### DESCRIPTION OF THE EMBODIMENTS

Hereinafter, embodiments of the present invention will be described.

### (System Configuration)

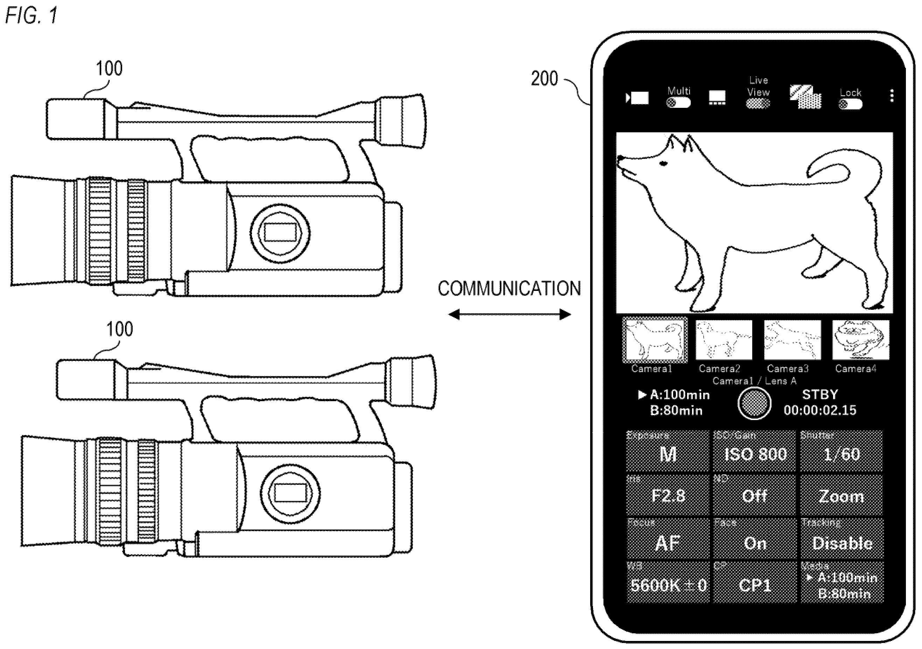

FIG. 1 is a schematic diagram illustrating a configuration example of a system according to the present embodiment. In the system of FIG. 1, a plurality of cameras 100 and a smartphone 200 are communicably connected to each other. FIG. 1 illustrates two cameras 100 but the number of the cameras 100 is not particularly limited, and one camera 100 may be connected to the smartphone 200 or three or more cameras 100 may be connected to the smartphone 200. A communication system (standard) is also not particularly limited and may be, for example, Wi-Fi (registered trademark), Bluetooth (registered trademark), or a wireless communication system exclusive to a manufacturer. The communication between the cameras 100 and the smartphone 200 may be wireless communication or wired communication. A communication system in the wired communication is also not particularly limited and may be, for example, RS-232C, RS-422A, USB, or Ethernet (registered trademark). Any communication system capable of transmitting and receiving a video and transmitting and receiving a setting value of a camera is applicable.

### (Configuration of Camera)

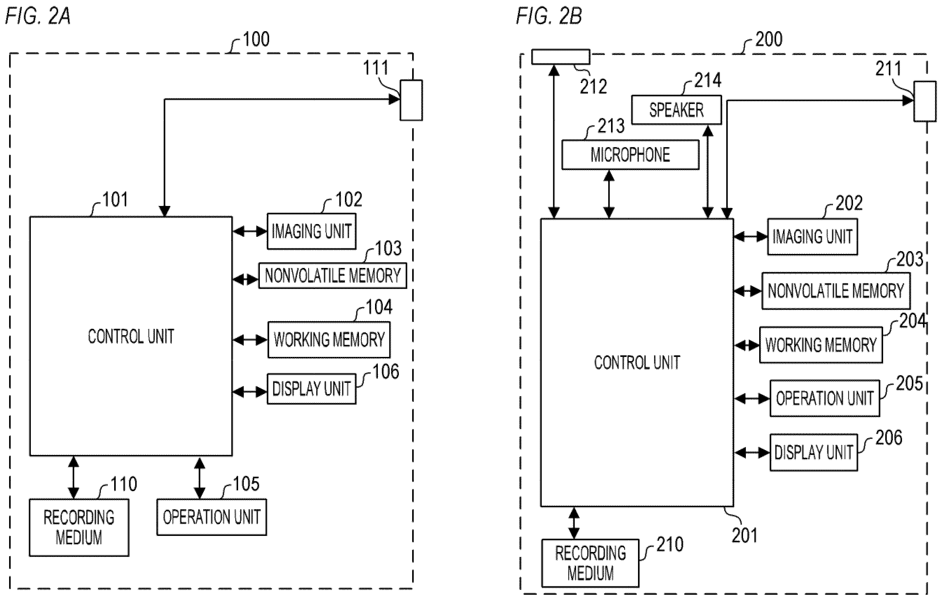

FIG. 2A is a block diagram illustrating a configuration example of the camera 100 (video camera) as an example of a data processing device according to the present embodiment. The data processing device is not limited to the camera 100. For example, the data processing device may be an electronic device such as a tablet device or a personal computer.

A control unit 101 controls each unit in the camera 100 according to an input signal or a program described below. Instead of causing the control unit 101 to control the entire camera 100, the processing may be shared by a plurality of hardware to control the entire camera 100.

An imaging unit 102 converts object light focused by a lens in the imaging unit 102 into an electrical signal, executes noise reduction processing or the like, and outputs image data that is digital data. The captured image data is accumulated in a buffer memory, is subjected to predetermined processing by the control unit 101, and is recorded in a recording medium 110.

A nonvolatile memory 103 is a nonvolatile memory that is electrically erasable and recordable, and stores a program described below to be executed by the control unit 101 or the like.

A working memory 104 is used as the buffer memory that temporarily stores the image data captured by the imaging unit 102, an image display memory of a display unit 106, a work area of the control unit 101, or the like.

An operation unit 105 is used for receiving an instruction for the camera 100 from a user. The operation unit 105 includes, for example, operation members operated by the user, such as a power button for instructing ON/OFF of a power supply of the camera 100, a release switch for instructing shooting, or a reproduction button for instructing reproduction of image data. The operation unit 105 also includes a touch panel formed in the display unit 106. The release switch includes a switch SW1 and a switch SW2. The release switch enters a so-called half-pressed state such that the switch SW1 is turned ON. As a result, an instruction for executing shooting preparations operation such as autofocus (AF) processing, autoexposure (AE) processing, auto white balance (AWB) processing, and electronic flash (EF) pre-flash processing is received. The release switch enters a so-called full-pressed state such that the switch SW2 is switched ON. As a result, the instruction for executing shooting is received.

The display unit 106 displays a live view image (LV image) as a captured image showing an object substantially in real time, a shoot (recorded) captured image, text for interactive operation, and the like. The display unit 106 is not necessarily mounted on the camera 100. The camera 100 can be connected to the internal or external display unit 106 as long as the camera 100 has at least a display control function of controlling display of the display unit 106.

The recording medium 110 can store image data output from the imaging unit 102. The recording medium 110 may be attachable and detachable with respect to the camera 100 or may be mounted on the camera 100. The camera 100 only needs to have at least a function of accessing at least the recording medium 110.

A connection unit 111 is an interface for connection to an external device. The camera 100 can exchange data with the external device via the connection unit 111. The connection unit 111 includes, for example, an interface for communication with the external device via a wireless LAN. The control unit 101 implements wireless communication with the external device by controlling the connection unit 111.

The camera 100 can operate as a slave device in an infrastructure mode of a wireless LAN communication. During operation as the slave device, the camera 100 can be connected to a peripheral access point (hereinafter, AP) to participate in a network formed by the AP. The camera 100 is one type of the AP and can also operate as a simplified AP (hereinafter, simple AP) having a limited function. The AP is an example of a relay device. When the camera 100 operates as the simple AP, the camera 100 itself forms a network. A peripheral device of the camera 100 can recognize the camera 100 as the AP and participate in the network formed by the camera 100. A program for allowing the camera 100 to operate as described above is stored in the nonvolatile memory 103. The camera 100 is one type of the AP, and is a simple AP not having a gateway function of transferring data received from the slave device to an Internet service provider or the like. Accordingly, even when the camera 100 receives data from another device participating in the network formed by the camera 100 itself, the camera 100 cannot transfer the received data to a network such as the Internet. Alternatively, the connection unit 111 may be an interface of wired communication instead of wireless communication.

A communication system with the external device is not particularly limited. The connection unit 111 may be an interface for executing wired communication by a system such as RS-232C, RS-422A, USB, or Ethernet (registered trademark).

### (Configuration of Smartphone)

FIG. 2B is a block diagram illustrating a configuration example of the smartphone 200 as an example of a control device according to the present embodiment. The control device is not limited to the smartphone 200. For example, the control device may be an electronic device such as a digital camera, a mobile media player, a tablet device, a personal computer, or a mobile phone.

A control unit 201 controls each unit in the smartphone 200 according to an input signal or a program described below. Instead of causing the control unit 201 to control the entire smartphone 200, the processing may be shared by a plurality of hardware to control the entire smartphone 200.

An imaging unit 202 converts object light focused by a lens in the imaging unit 202 into an electrical signal, executes noise reduction processing or the like, and outputs digital data as image data. The captured image data is accumulated in a buffer memory, is subjected to predetermined processing by the control unit 201, and is recorded in a recording medium 210.

A nonvolatile memory 203 is a nonvolatile memory that is electrically erasable and recordable, and stores an operating system (OS) that is basic software to be executed by the control unit 201, various programs, and the like. A program for communication with the camera 100 is stored in the nonvolatile memory 203, and is installed as a camera control application. The processing of the smartphone 200 is implemented by reading a program of the camera control application. The camera control application has a function for using basic functions (for example, a function of a wireless LAN, a function of Bluetooth, and a function of calling another application) of the OS installed in the smartphone 200. The camera control application has a remote shooting function of remotely operating and causing the camera 100 to shoot from the smartphone 200 while viewing the LV image obtained from the camera 100 by the smartphone 200. The camera control application has a remote reading function of remotely reading image data stored in a recording medium mounted on the camera 100 or receiving the image data. The OS of the smartphone 200 may have the functions of the present embodiment (for example, the function of the camera control application).

A working memory 204 is used as the buffer memory that temporarily stores the image data captured by the imaging unit 202, an image display memory of a display unit 206, a work area of the control unit 201, or the like.

An operation unit 205 is used for receiving an instruction for the smartphone 200 from the user. The operation unit 205 includes, for example, operation members operated by the user, such as a power button for instructing ON/OFF of a power supply of the smartphone 200 or a touch panel formed in the display unit 206.

The display unit 206 displays an image, text for interactive operation, or the like. The display unit 206 is not necessarily mounted on the smartphone 200. The smartphone 200 can be connected to the internal or external display unit 206 as long as the smartphone 200 has at least a display control function of controlling display of the display unit 206.

The recording medium 210 can store image data output from the imaging unit 202, image data received from the camera 100, or the like. The recording medium 210 may be attachable and detachable with respect to the smartphone 200 or may be mounted on the smartphone 200. The smartphone 200 only needs to have at least a function of accessing at least the recording medium 210.

A connection unit 211 is an interface for connection to an external device. The smartphone 200 can exchange data with the external device via the connection unit 211. The connection unit 211 includes, for example, an interface for communication with the external device via a wireless LAN. The control unit 201 implements wireless communication with the external device by controlling the connection unit 211.

The smartphone 200 can operate as a slave device in an infrastructure mode of a wireless LAN communication and can participate in a network formed by a peripheral AP. The camera 100 may operate as a simple AP such that the smartphone 200 participates in the network formed by the camera 100.

A public network connection unit 212 is an interface used for public wireless communication. The smartphone 200 is connected to another device via the public network connection unit 212 and can execute data communication with the other device or make a call with a user of the other device. During the call, the control unit 201 acquires a voice signal via a microphone 213 or outputs a voice signal via a speaker 214. The public network connection unit 212 includes, for example, an interface for executing communication using 3G, 4G, or 5G. The communication system is not particularly limited and may be, for example, LTE, WiMAX, ADSL, or FTTH. The connection unit 211 and the public network connection unit 212 do not need to be configured as independent hardware, and for example, one antenna may function as both of the connection unit 211 and the public network connection unit 212.

In the following description, the smartphone 200 may be described as the subject of the processing, but in practice, the control unit 201 implements various types of processing by reading and executing the programs stored in the nonvolatile memory 203. Likewise, the camera 100 may be described as the subject of the processing, but in practice, the control unit 101 implements various types of processing by reading and executing the programs stored in the nonvolatile memory 103.

### (Screen Example of Smartphone)

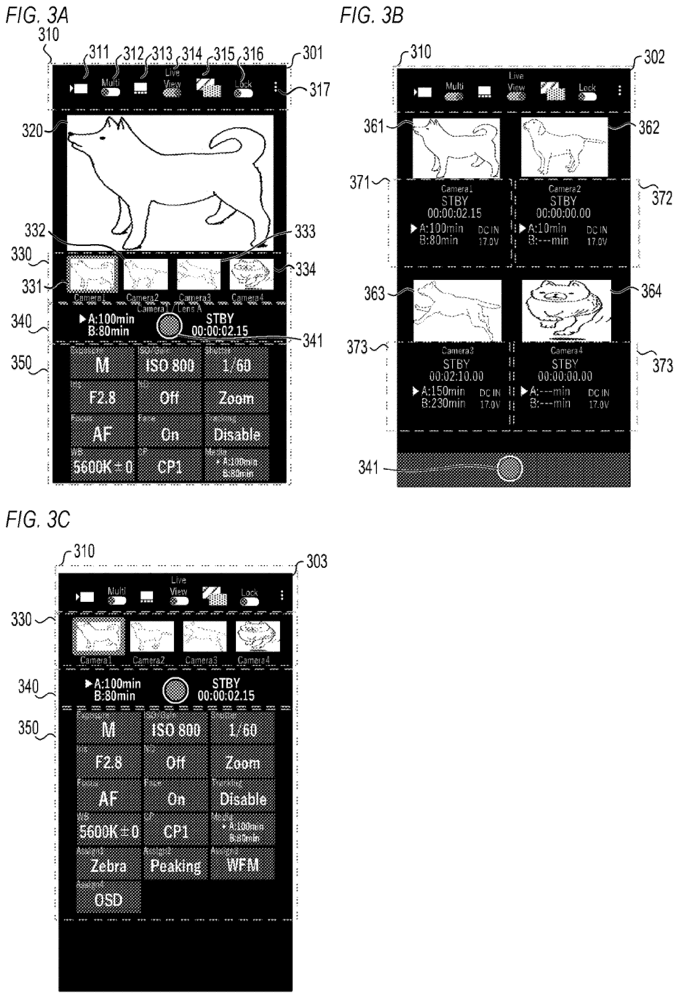

FIGS. 3A to 3C, 4A to 4C, 5A to 5C, and 6A to 6C are schematic diagrams illustrating screen examples of the camera control application displayed on the display unit 206 by the smartphone 200. The camera control application is connected to a plurality of cameras simultaneously and can operate each of the cameras. The camera control application receives an LV image or various types of data of the camera via communication with the camera, and displays the LV image or the data on the display unit 206. The display unit 206 is a display unit capable of receiving a touch operation, such as a display unit on which a touch panel is formed.

FIGS. 3A to 3C are schematic diagrams illustrating an example of a main screen and a multi-screen of the camera control application. FIG. 3A is an example of the main screen. In FIG. 3A, the control unit 201 is connected to the camera via the camera control application, receives the LV image and various current setting values of the camera from the camera, and displays the LV image and the setting values on a main screen 301.

The control unit 201 displays a header portion 310 for changing various settings in an upper portion of the main screen 301. For example, the control unit 201 displays a camera connection setting button 311, a multi-view selector switch 312, a view switching button 313, an LV display switch 314, an assistance setting button 315, and a screen lock switch 316 in the header portion 310. The control unit 201 also displays an additional setting button 317 in the header portion 310.

The camera connection setting button 311 is a setting button for connection or disconnection with respect to the camera. The view switching button 313 is a setting button for selecting a display mode (view) of the LV image, such as a normal display mode, a multi-screen display mode, or a full-screen display mode (each of the display modes will be described below). The assistance setting button 315 is a setting button for selecting an assistance function such as enlarged display, marker display, or false-color display (various assistance functions will be described below). The additional setting button 317 is a setting button for other additional settings. When the user touches any of the setting buttons, the control unit 201 transitions the display screen (displayed screen) to a setting screen corresponding to the touched setting button.

The multi-view selector switch 312 is a selector switch for switching to enable/disable a multi-view. The LV display switch 314 is a selector switch for switching to enable/disable an LV display. The screen lock switch 316 is a selector switch for switching to enable/disable a screen lock. The details of the functions will be described below. When the user touches any of the selector switches, the control unit 201 switches to enable/disable a function corresponding to the touched selector switch. **In** FIG. 3A, the multi-view selector switch 312 is in a disabled state, the LV display switch 314 is in an enabled state, and the screen lock switch 316 is in a disabled state. The enabled state of a switch is a state where a function corresponding to the switch is enabled, and the disabled state of a switch is a state where a function corresponding to the switch is disabled.

The control unit 201 also displays an LV area 320 and a sub-LV area 330 on the main screen 301. The control unit 201 displays an LV image (main image) acquired from a camera to be operated in the LV area 320, and displays all of the LV images acquired from the connected cameras in the sub-LV area 330. In FIG. 3A, four cameras (Cameras 1 to 4) are connected to the control unit 201, and four LV images 331 to 334 acquired from the four cameras, respectively, are aligned and displayed in the sub-LV area 330. When the user touches any of the LV images 331 to 334, the control unit 201 selects the touched LV image as a main image, and selects a camera corresponding to the touched LV image as the camera to be operated. In FIG. 3A, the LV image 331 (Camera 1) is selected. The control unit 201 displays a cursor surrounding the LV image 331 as a cursor indicating that the LV image 331 is selected. The control unit 201 displays the LV image same as the LV image 331 in the LV area 320.

The control unit 201 also displays a recording information area 340 and an operation area 350 on the main screen 301. The control unit 201 displays a recording state of an image in the camera to be operated or displays a recording start/stop button 341 for instructing start or stop of recording in the recording information area 340. For example, as the recording state, a medium remaining time, a time code, a REC (recording)/STBY (standby) state, or the like is displayed. When the user touches the recording start/stop button 341 at the center, the control unit 201 instructs the camera to be operated to start or stop recording an image. The control unit 201 displays an operation button group in the operation area 350. A current setting value to be changed by an operation button is displayed on the operation button. When the user touches the operation button, the control unit 201 instructs the camera to be operated to change the setting value corresponding to the touched operation button or transitions the display screen to a setting screen for changing the setting value corresponding to the touched operation button. When the user executes a sliding operation of touching the operation area 350 and moving a touch position (touchmove), the control unit 201 scrolls the operation button group and displays the operation buttons that were not displayed in the operation area 350.

FIG. 3B illustrates an example of the multi-screen. For example, when the user touches the multi-view selector switch 312 while the main screen 301 of FIG. 3A is being displayed, the control unit 201 transitions the display screen from the main screen 301 of FIG. 3A to a multi-screen 302 of FIG. 3B. The multi-screen 302 is a screen for collectively checking the recording states of the connected cameras, and the LV area 320 and the operation area 350 are not displayed on the multi-screen 302.

The control unit 201 displays the header portion 310 in an upper portion of the multi-screen 302. In FIG. 3B, unlike FIG. 3A, the multi-view selector switch 312 is in the enabled state, thereby showing that the current display screen is the multi-screen. The control unit 201 displays all of the LV images and all of the recording states acquired from the connected cameras on the multi-screen 302. In FIG. 3B, four cameras (Cameras 1 to 4) are connected to the control unit 201, and four LV images 361 to 364 acquired from the four cameras, respectively, are aligned and displayed. The arrangement of the LV images 361 to 364 is different from the arrangement of the LV images 331 to 334 of FIG. 3A in that the LV images 361 to 364 are displayed such that the sizes thereof are larger than the sizes of the LV images 331 to 334. Recording states 371 to 374 of the four cameras (Cameras 1 to 4) are displayed below the LV images 361 to 364. The control unit 201 displays the recording start/stop button 341 in a lower portion of the multi-screen 302. When the user touches the recording start/stop button 341 at the center, the control unit 201 instructs all of the cameras to start or stop recording an image. While displaying the multi-screen 302, the user cannot select only one camera as the camera to be operated.

FIG. 3C illustrates an example of the main screen when the LV display is disabled. For example, when the user touches the LV display switch 314 while the main screen 301 of FIG. 3A is being displayed, the control unit 201 transitions the display screen from the main screen 301 of FIG. 3A to a main screen 303 of FIG. 3C. The main screen 303 is a screen where the LV area 320 is not displayed. The header portion 310 is displayed in an upper portion of the main screen 303. FIG. 3C is different from FIG. 3A in that the LV display switch 314 of the header portion 310 is in the disabled state, thereby showing that the LV area 320 is not displayed. The sub-LV area 330, the recording information area 340, and the operation area 350 are also displayed on the main screen 303. Since the LV area 320 is not displayed, the sub-LV area 330, the recording information area 340, and the operation area 350 are moved upward. Since the LV area 320 is not displayed, the operation area 350 is larger, and the number of operation buttons displayed in the operation area 350 is increased. In FIG. 3C, since all of the operation buttons are displayed in the operation area 350, the control unit 201 does not receive the sliding operation on the operation area 350.

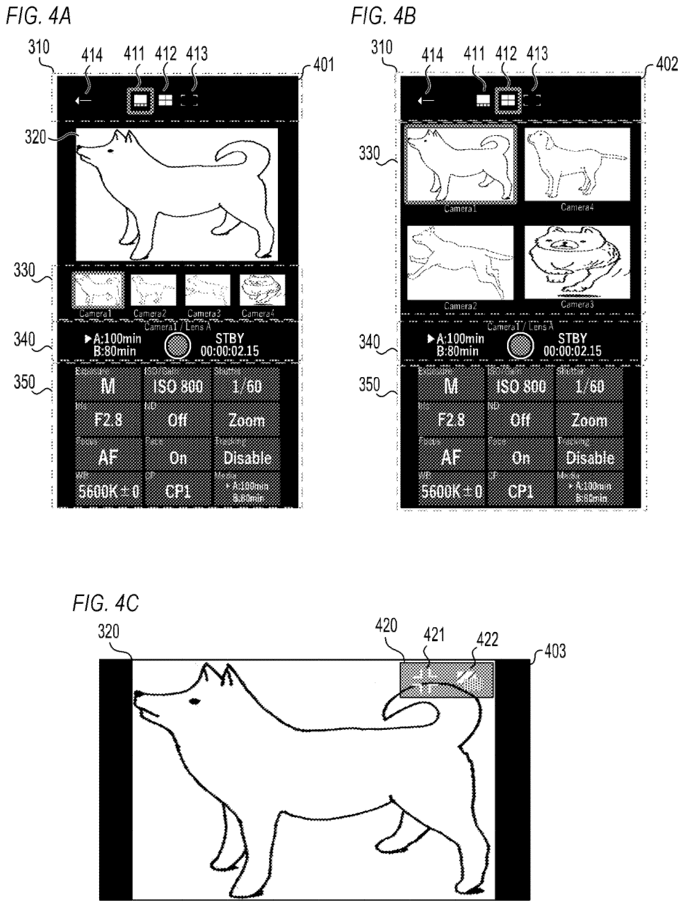

FIGS. 4A to 4C are schematic diagrams illustrating screen examples of the camera control application and illustrate an example of switching the LV display mode.

FIG. 4A illustrates an example of a screen of the normal display mode. A screen 401 of FIG. 4A is the same as the main screen 301 of FIG. 3A, but FIG. 4A and FIG. 3A are different in the display state (display content) of the header portion 310. For example, when the user touches the view switching button 313 while the main screen 301 of FIG. 3A is being displayed, the control unit 201 switches the display state of the header portion 310 from the state of FIG. 3A to the state of FIG. 4A. In FIG. 4A, a normal display button 411, a 2×2 display button 412, a full-screen display button 413, and a return button 414 are displayed in the header portion 310. When the user touches the normal display button 411, the 2×2 display button 412, or the full-screen display button 413, the control unit 201 switches the display mode to the mode corresponding to the touched button. In FIG. 4A, a cursor surrounding the normal display button 411 is displayed, thereby showing that the display mode is the normal display mode. When the user touches the return button 414, the control unit 201 switches the display state of the header portion 310 from the state of FIG. 4A to the state of FIG. 3A.

FIG. 4B illustrates an example of a screen of the 2×2 display mode. For example, when the user touches the 2×2 display button 412 while the main screen 401 of FIG. 4A is being displayed, the control unit 201 transitions the display screen from the screen 401 of FIG. 4A to a screen 402 of FIG. 4B. The 2×2 display mode is a multi-screen display mode where the LV area 320 is not displayed and the sub-LV area 330 is displayed, and is a display mode where four LV images are displayed in two rows and two columns. In the 2×2 display mode, as in the normal display mode (while the screens 301 or 401 of FIGS. 3A or 4A are being displayed), the camera to be operated is selected by touching the LV image in the sub-LV area 330. In FIG. 4B, a cursor surrounding the LV image (main image) of the camera to be operated among the four LV images in two rows and two columns is displayed. As in the screens 301 and 401 of FIGS. 3A and 4A, the recording information area 340 and the operation area 350 are displayed on the screen 402 of FIG. 4B.

FIG. 4C illustrates an example of a screen of the full-screen display mode. For example, when the user touches the full-screen display button 413 while the main screen 401 of FIG. 4A is being displayed, the control unit 201 transitions the display screen from the screen 401 of FIG. 4A to a screen 403 of FIG. 4C. The full-screen display mode is a display mode where the LV area 320 (main image) is displayed in a full screen without displaying the sub-LV area 330, the recording information area 340, and the operation area 350. On the screen 401 of the normal display mode (FIG. 4A), the header portion 310 (an operation area where a plurality of items for user operation are displayed), the LV area 320, and the sub-LV area 330 are longitudinally arranged. Meanwhile, in the full-screen display mode (FIG. 4C), a full-screen header portion 420 is displayed to be superimposed on a part of the LV area 320. The full-screen header portion 420 is an operation area where a part of the plurality of items for user operation is displayed. For example, the control unit 201 displays a reduced-display switching button 421 and an assistance setting button 422 in the full-screen header portion 420 to be superimposed on the main image displayed in the LV area 320. When the user touches the reduced-display switching button 421, the control unit 201 returns the display screen to the screen displayed before the screen 403 of the full-screen display mode (for example, the screen 401 of FIG. 4A or the screen 402 of FIG. 4B). Similar to the assistance setting button 315, the assistance setting button 422 is a setting button for selecting an assistance function such as enlarged display, marker display, or false-color display. As a display mode equivalent to the full-screen display mode, a display mode where the LV area 320 is displayed to be larger than the LV area 320 of FIG. 4A but is not displayed in a full screen may be settable.

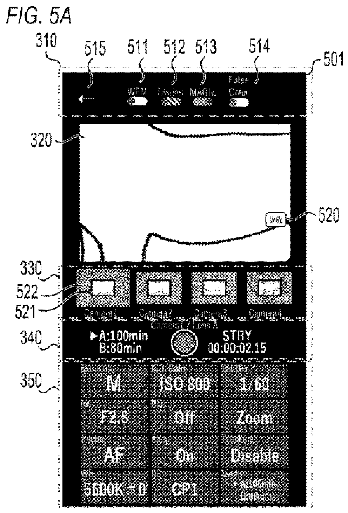

FIGS. 5A to 5C are schematic diagrams illustrating screen examples of the camera control application, and illustrate an example where the enlarged display is enabled. The camera control application has an enlargement function of cropping the LV image of the camera to be operated (main image) and enlarging the cropped image. In the enlargement function, the control unit 201 loads the main image on the working memory 204, sets a part of the main image as an enlarged area, crops an image of the enlarged area from the main image, and resizes and displays the cropped image. By using the enlargement function, the user can check an image quality such as focus in detail.

FIG. 5A illustrates an example of a screen where the enlarged display is executed in the normal display mode. A screen 501 of FIG. 5A is the same as the main screen 301 of FIG. 3A, but FIG. 5A and FIG. 3A are different in the display state (display content) of the header portion 310. For example, when the user touches the assistance setting button 315 while the main screen 301 of FIG. 3A is being displayed, the control unit 201 switches the display state of the header portion 310 from the state of FIG. 3A to the state of FIG. 5A. In FIG. 5A, a WFM switch 511, a marker switch 512, a MAGN switch 513, a False Color switch 514, and a return button 515 are displayed in the header portion 310.

When the user touches the WFM switch 511, the control unit 201 switches to enable/disable a display of a waveform monitor image representing a luminance distribution of the LV image acquired from the camera to be operated (main image). When the user touches the marker switch 512, the control unit 201 switches to enable/disable a marker display. A marker is a guideline for checking a composition, and examples of the marker include a center marker representing the center of an image, a horizontal marker representing a horizontal direction of an image, and a grid marker that divides an image into a plurality of areas aligned in a horizontal direction and a vertical direction. When the user touches the MAGN switch 513, the control unit 201 switches to enable/disable the enlarged display of the LV image. When the user touches the False Color switch 514, the control unit 201 switches to enable/disable a false color display of executing coloration on the LV image (converting each of pixel values of the LV image into a pixel value corresponding to a luminance). When the user touches the return button 515, the control unit 201 switches the display state of the header portion 310 from the state of FIG. 5A to the state of FIG. 3A.

The enlarged display is executed only in the LV area 320. The waveform monitor image may not be displayable on the multi-screen, or may be displayable in the 2×2 display mode where the LV area 320 is not displayed. When the LV area 320 is displayed, the marker may be displayed only in the LV area 320, and in the 2×2 display mode or the multi-screen where the LV area 320 is not displayed, the marker may be displayed in each of the LV images. The false color display may be executed in the LV area 320 and may also be executed on the main image displayed in the sub-LV area 330. The false color display does not need to be executed on another LV image displayed in the sub-LV area 330 or on the multi-screen. By limiting an image on which the false color display is to be executed to the main image, the main image is conspicuous, and the user can easily grasp the main image.

In FIG. 5A, the WFM switch 511, the marker switch 512, and the False Color switch 514 are in the disabled state, and the MAGN switch 513 is in the enabled state. The enabled state of a switch is a state where a function corresponding to the switch is enabled, and the disabled state of a switch is a state where a function corresponding to the switch is disabled. While checking the enlarged display, it is difficult for a marker to be a reference when the marker is based on the entire LV image, and thus, when the MAGN switch 513 is in the enabled state, the control unit 201 causes the marker switch 512 to forcibly enter the disabled state. Likewise, when the MAGN switch 513 is in the enabled state, the control unit 201 may forcibly disable the display of an AF frame indicating a focused area. When the multi-screen is displayed, the control unit 201 causes the WFM switch 511, the MAGN switch 513, and the False Color switch 514 to forcibly enter the disabled state. In the 2×2 display mode, the control unit 201 may cause the MAGN switch 513 to forcibly enter the disabled state. When the control unit 201 causes a switch to forcibly enter the disabled state, the control unit 201 may display the switch in monochrome or the like such that it is identifiable that the switch forcibly entered the disabled state.

In FIG. 5A, the control unit 201 executes the enlarged display of the main image in the LV area 320, and displays an MAGN icon 520 representing that the enlarged display is enabled to be superimposed on a video. The control unit 201 can identify the enlarged area (area to be enlarged and displayed) in the main image displayed in the sub-LV area 330. A method of making the enlarged area identifiable is not particularly limited, and in FIG. 5A, a frame 521 (guide) surrounding the enlarged area and a mask 522 (for example, a black and semi-transparent mask) covering an outside area of the enlarged area are displayed to be superimposed on the main image displayed in the sub-LV area 330. As a result, the user can easily grasp the enlarged area. By causing items representing the enlarged area not to be displayed in the LV area 320, deterioration in visibility of the main image displayed in the LV area 320 can be prevented. Only either of the frame 521 or the mask 522 may be used.

In FIG. 5A, the control unit 201 can identify the enlarged areas in other LV images displayed in the sub-LV area 330. When the main image (the camera to be operated) is switched, the control unit 201 displays the enlarged area of the main image after switching in the LV area 320, and continues the enlarged display. As a result, enabled/disable of the enlarged display can be prevented from being frequently switched, and complication of a user operation can be reduced.

The control unit 201 records information regarding the enlarged area of each of the LV images (each of the cameras) in the nonvolatile memory 203, and uses the information for the enlarged display, for the display of the frame 521 and the mask 522, or the like. A default enlarged area is not particularly limited, and for example, the control unit 201 sets an area positioned at the center of the LV image and having an area of 1/4 of the entire LV image (sizes in the horizontal direction and the vertical direction are 1/2 of those of the entire LV image) as the enlarged area. In FIG. 5A, the default enlarged area is set for all of the Cameras 1 to 4. When the enlarged display is disabled, the control unit 201 does not need to show the enlarged area identifiable in the sub-LV area 330.

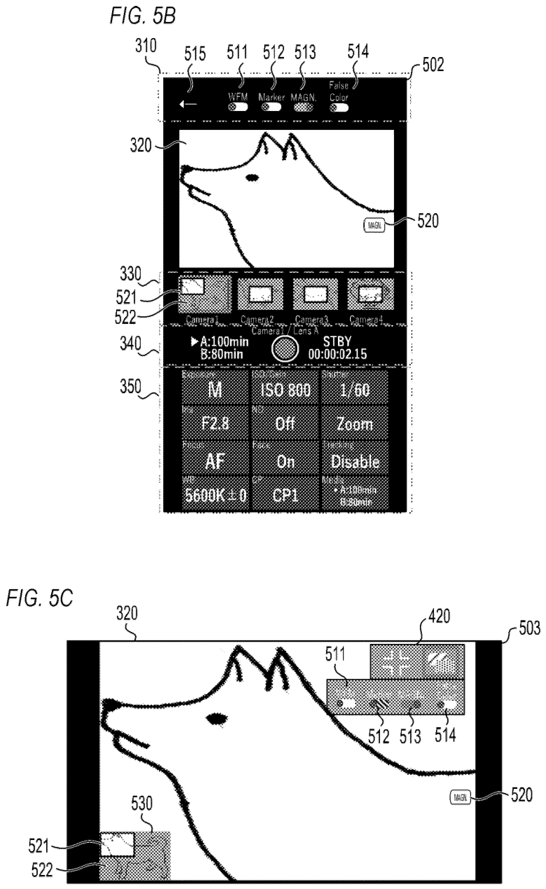

FIG. 5B illustrates an example of a screen when the enlarged area is changed from the state of FIG. 5A. When the user executes a sliding operation (dragging operation) or a pinch operation on the LV area 320, the control unit 201 changes a position or a size of the enlarged area of the main image. The pinch operation is a touch operation where the user touches two positions and moves the two touch positions toward or away from each other. The position of the enlarged area is changed according to the sliding operation, the enlarged area is reduced according to a pinch operation of moving the two touch positions toward each other (pinch-in operation), and the enlarged area is enlarged according to a pinch operation of moving the two touch positions away from each other (pinch-out operation). The position of the enlarged area can change depending on the pinch operation. In a screen 502 of FIG. 5B, the enlarged area of the main image is changed from that of FIG. 5A, and the display in the LV area 320 or the display of the frame 521 or the mask 522 superimposed on the main image of the sub-LV area 330 is changed from that of FIG. 5A. For example, the body of a dog is displayed in the LV area 320 in FIG. 5A, and the head of the dog is displayed in the LV area 320 in FIG. 5B. In FIG. 5A, the frame 521 is displayed in the center of the main image of the sub-LV area 330, and in FIG. 5B, the frame 521 is displayed in an upper left portion of the main image of the sub-LV area 330.

FIG. 5C illustrates an example of a screen where the enlarged display is executed in the full-screen display mode. A screen 503 of FIG. 5C is the same as the screen 403 of FIG. 4C, but the WFM switch 511, the marker switch 512, the MAGN switch 513, and the False Color switch 514 are displayed on the screen 503 of FIG. 5C. For example, when the user touches the assistance setting button 422 while the main screen 403 of FIG. 4C is being displayed, the control unit 201 displays the WFM switch 511, the marker switch 512, the MAGN switch 513, and the False Color switch 514. When the user touches the assistance setting button 422 again, the control unit 201 causes the WFM switch 511, the marker switch 512, the MAGN switch 513, and the False Color switch 514 not to be displayed.

In FIG. 5C, as in FIG. 5A, the WFM switch 511, the marker switch 512, and the False Color switch 514 are in the disabled state, and the MAGN switch 513 is in the enabled state. In FIG. 5C, as in FIG. 5A, the control unit 201 executes the enlarged display of the main image in the LV area 320, and displays the MAGN icon 520 representing that the enlarged display is enabled to be superimposed on a video. In FIG. 5A, the control unit 201 can identify the enlarged areas in the sub-LV area 330, and in FIG. 5C, the control unit 201 displays the item representing the enlarged area in the LV area 320. In FIG. 5C, as the item representing the enlarged area, a reduced-size image 530 of the main image where the enlarged area is identifiable by the frame 521 and the mask 522 is displayed. The item representing the enlarged area is not limited thereto, and for example, a frame representing the entire main image and a frame representing the enlarged area may be used in combination. By displaying the item representing the enlarged area, the user can easily grasp the enlarged area. The LV area 320 is large (on the full screen) in the full-screen display mode, and thus, even when the item representing the enlarged area is displayed, visibility of the main image displayed in the LV area 320 substantially does not deteriorate.

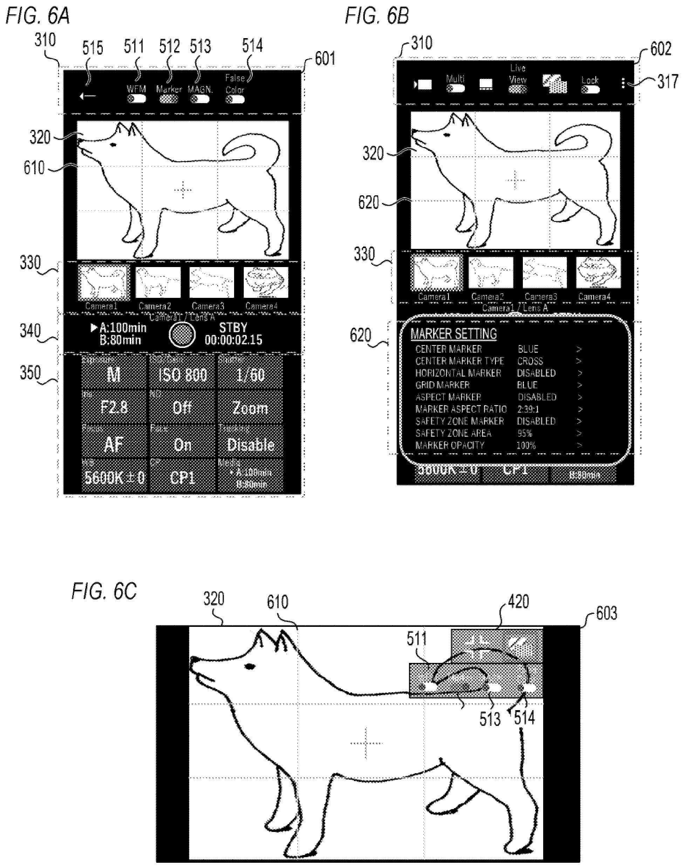

FIGS. 6A to 6C are schematic diagrams illustrating screen examples of the camera control application, and illustrate an example where the marker display is enabled. The camera control application has a marker function of displaying the marker to be superimposed on the LV image. The marker function has an assistance function for checking a composition. Due to the marker function, various markers such as a center marker representing the center of an image, a horizontal marker representing a horizontal direction of an image, and a grid marker that divides an image into a plurality of areas aligned in a horizontal direction and a vertical direction, can be displayed.

FIG. 6A illustrates an example of a screen where the marker display is executed in the normal display mode. A screen 601 of FIG. 6A is the same as the main screen 301 of FIG. 3A, but FIG. 6A and FIG. 3A are different in the display state (display content) of the header portion 310. In FIG. 6A, the WFM switch 511, the marker switch 512, the MAGN switch 513, the False Color switch 514, and the return button 515 are displayed in the header portion 310. In FIG. 6A, the WFM switch 511, the MAGN switch 513, and the False Color switch 514 are in the disabled state, and the marker switch 512 is in the enabled state.

In FIG. 6A, the control unit 201 displays a marker 610 to be superimposed on the main image displayed in the LV area 320. Each of the LV images displayed in the sub-LV area 330 is small such that it is difficult for the marker to be a reference, and thus, the control unit 201 does not display the marker in the sub-LV area 330. As described above, in the 2×2 display mode or the multi-screen where the LV area 320 is not displayed, each of the LV images is relatively large, and thus, the marker may be displayed in each of the LV images.

FIG. 6B illustrates an example of a marker setting screen. For example, when the user touches the return button 515, touches the additional setting button 317, and instructs to start marker setting while the screen 601 of FIG. 6A is being displayed, the control unit 201 transitions the display screen from the screen 601 of FIG. 6A to a screen 602 of FIG. 6B. On the screen 602 of FIG. 6B, a marker setting menu 620 is displayed to be superimposed on the screen 601 of FIG. 6A. The user can display a preferred marker by operating the marker setting menu 620. In FIG. 6B, the center marker and the grid marker are set to be enabled, and in FIGS. 6A to 6C, the center marker and the grid marker are displayed in the LV area 320.

As a marker setting value, the control unit 201 may prepare a plurality of setting values corresponding to the plurality of LV images (the plurality of cameras), respectively, but in the present embodiment, a marker setting value common to all of the LV images (all of the cameras) is recorded in the nonvolatile memory 203. Therefore, even when the main image (the camera to be operated) is switched, the same marker is continuously displayed.

FIG. 6C illustrates an example of a screen where the marker display is executed in the full-screen display mode. A screen 603 of FIG. 6C is the same as the screen 403 of FIG. 4C, but the WFM switch 511, the marker switch 512, the MAGN switch 513, and the False Color switch 514 are displayed on the screen 603 of FIG. 6C. In FIG. 6C, the WFM switch 511, the MAGN switch 513, and the False Color switch 514 are in the disabled state, and the marker switch 512 is in the enabled state. In FIG. 6C, as in FIG. 6A, the control unit 201 displays the marker 610 to be superimposed on the main image displayed in the LV area 320.

### (Overall Operation of Smartphone)

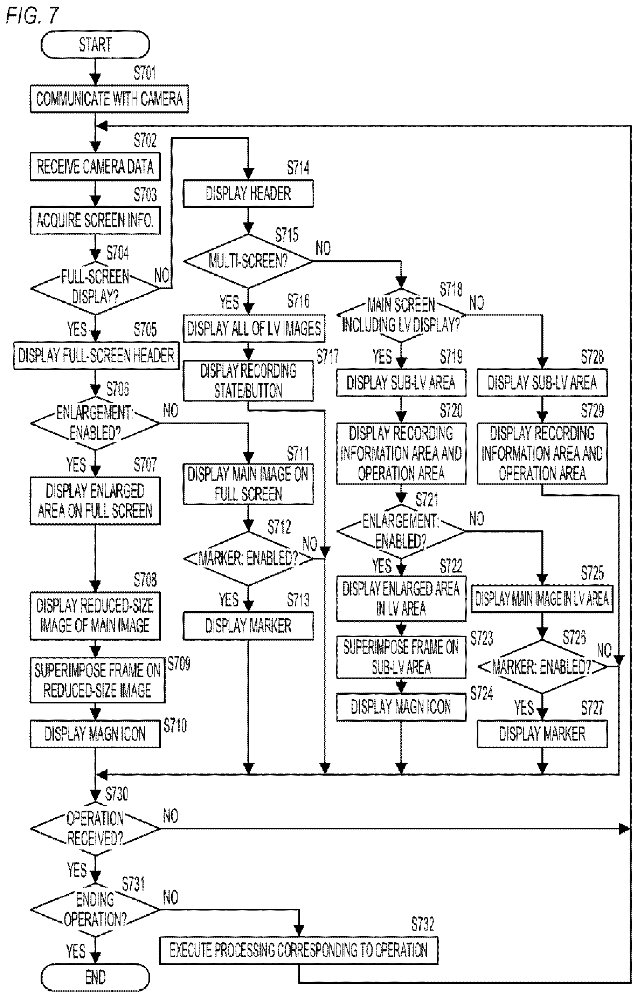

FIG. 7 is a flowchart illustrating an overall operation of the smartphone 200. The overall operation of FIG. 7 is implemented by the control unit 201 loading the program recorded in the nonvolatile memory 203 (for example, the program of the camera control application) on the working memory 204 and executing the program. For example, when start of the camera control application is instructed, the overall operation of FIG. 7 starts.

In S701, the control unit 201 executes communication with the camera 100 via the connection unit 211.

In S702, the control unit 201 receives data from the camera 100 via the connection unit 211. The data includes state, capability, setting value, LV image, and the like of the camera 100.

In S703, the control unit 201 acquires screen information representing the type of the screen to be displayed on the display unit 206 from the working memory 204. When the smartphone 200 (camera control application) starts, screen information representing the main screen including the LV display (the display of the LV area 320) (the screen of the normal display mode) is stored. When changing the screen according to a user operation, the control unit 201 updates the screen information recorded in the working memory 204. The screen information represents, for example, any of the screen of the full-screen display mode, the multi-screen, the main screen including the LV display, and the main screen not including the LV display. The screen information may represent the screen of the 2×2 display mode.

In S704, the control unit 201 determines whether the display mode is the full-screen display mode (whether the screen information acquired in S703 represents the screen of the full-screen display mode). When the display mode is the full-screen display mode, the operation proceeds to S705, and otherwise, the operation proceeds to S714.

In S705, the control unit 201 displays the full-screen header portion 420.

In S706, the control unit 201 reads information representing whether to enable/disable the enlargement function (enlarged display) from the working memory 204, and determines whether the enlargement function is enabled. When the enlargement function is enabled, the operation proceeds to S707, and otherwise, the operation proceeds to S711.

When the overall operation of FIG. 7 starts, the control unit 201 loads the information regarding the enlarged area stored in the nonvolatile memory 203 on the working memory 204. In S707, the control unit 201 reads the information regarding the enlarged area of the main image (the LV image of the camera to be operated) from the working memory 204, crops the image of the enlarged area from the main image, and displays the cropped image on the full screen (the LV area 320 of FIG. 5C). The full-screen header portion 420 displayed in S705 is displayed in front of the main image.

In S708, the control unit 201 displays the reduced-size image 530 of FIG. 5C (the reduced-size image 530 of the main image) to be superimposed on the main image displayed in S707.

In S709, the control unit 201 displays the frame 521 and the mask 522 of FIG. 5C to be superimposed on the reduced-size image 530 displayed in S708. The enlarged area is identifiable by the frame 521 and the mask 522.

In S710, the control unit 201 displays the MAGN icon 520 of FIG. 5C to be superimposed on the main image displayed in S707.

In S705 to S710, the screen 503 of FIG. 5C where the enlarged display is executed in the full-screen display mode is displayed.

In S711, the control unit 201 displays the main image on the full screen (the LV area 320 of FIGS. 4C and 6C).

In S712, the control unit 201 reads information representing whether to enable/disable the marker function (marker display) from the working memory 204, and determines whether the marker function is enabled. When the marker function is enabled, the operation proceeds to S713 and otherwise, the operation proceeds to S730.

When the overall operation of FIG. 7 starts, the control unit 201 loads the marker setting value stored in the nonvolatile memory 203 on the working memory 204. In S713, the control unit 201 reads the marker setting value from the working memory 204, and displays the marker to be superimposed on the main image displayed in S711.

By executing S705, S706, S711, and S712, the screen 403 of FIG. 4C where both the enlarged display and the marker display are not executed in the full-screen display mode is displayed. By further executing S713, the screen 603 of FIG. 6C where the marker display is executed in the full-screen display mode is displayed.

In S714, the control unit 201 executes the display of the header portion 310.

In S715, the control unit 201 determines whether the screen information acquired in S703 represents the multi-screen. When the screen information represents the multi-screen, the operation proceeds to S716, and otherwise, the operation proceeds to S718.

In S716, the control unit 201 displays all of the LV images acquired from the connected cameras (the LV images 361 to 364 of FIG. 3B).

In S717, the control unit 201 displays all of the recording states acquired from the connected cameras (the recording states 371 to 374 of FIG. 3B) and the recording start/stop button 341 of FIG. 3B.

By executing S714 to S717, the multi-screen 302 of FIG. 3B is displayed. When the multi-screen 302 is displayed, the enlargement function and the marker function are ignored, and the multi-screen 302 does not change depending on whether the ignored functions are enabled/disabled.

In S718, the control unit 201 determines whether the screen information acquired in S703 represents the main screen including the LV display (the display of the LV area 320). When the screen information represents the main screen including the LV display, the operation proceeds to S719, and otherwise, the operation proceeds to S728.

In S719, the control unit 201 displays the sub-LV area 330 of FIGS. 3A, 5A, and 6A.

In S720, the control unit 201 displays the recording information area 340 and the operation area 350 of FIGS. 3A, 5A, and 6A.

In S721, the control unit 201 reads information representing whether to enable/disable the enlargement function (enlarged display) from the working memory 204, and determines whether the enlargement function is enabled. When the enlargement function is enabled, the operation proceeds to S722, and otherwise, the operation proceeds to S725.

In S722, the control unit 201 reads the information regarding the enlarged area of the main image from the working memory 204, crops the image of the enlarged area from the main image, and displays the cropped image in the LV area 320 of FIG. 5A.

In S723, the control unit 201 displays the frame 521 and the mask 522 of FIG. 5A to be superimposed on each of the LV images of the sub-LV area 330 displayed in S719.

In S724, the control unit 201 displays the MAGN icon 520 of FIG. 5A to be superimposed on the main image displayed in S722.

By executing S714, S715, and S718 to S724, the screen 501 of FIG. 5A where the enlarged display is executed in the normal display mode including the LV display is displayed.

In S725, the control unit 201 displays the main image in the LV area 320 of FIGS. 4A and 6A.

In S726, the control unit 201 reads information representing whether to enable/disable the marker function (marker display) from the working memory 204, and determines whether the marker function is enabled. When the marker function is enabled, the operation proceeds to S727, and otherwise, the operation proceeds to S730.

In S727, the control unit 201 reads the marker setting value from the working memory 204, and displays the marker to be superimposed on the main image displayed in S725.

By executing S714, S715, S718 to S721, S725, and S726, the screen 401 of FIG. 4A where both the enlarged display and the marker display are not executed in the normal display mode including the LV display is displayed. By further executing S727, the screen 601 of FIG. 6A where the marker display is executed in the normal display mode including the LV display is displayed.

In S728, the control unit 201 displays the sub-LV area 330 of FIG. 3C.

In S729, the control unit 201 displays the recording information area 340 and the operation area 350 of FIG. 3C.

By executing S714, S715, S718, S728, and S729, the screen 403 of FIG. 4C in the normal display mode including the LV display is displayed. When the screen 403 is displayed, the enlargement function and the marker function are ignored, and the screen 403 does not change depending on whether the ignored functions are enabled/disabled.

In S730, the control unit 201 determines whether a user operation is received. When the user operation is received, the operation proceeds to S731, and otherwise, the operation proceeds to S702. The user operation is, for example, a touch operation on a touch panel provided in the display unit 206.

In S731, the control unit 201 determines whether the user operation received in S730 is an application ending operation. When the user operation is the application ending operation, the operation ends the overall operation of FIG. 7, and otherwise, the operation proceeds to S732.

In S732, the control unit 201 executes processing corresponding to the user operation received in S730. For example, the control unit 201 changes the display mode or changes a setting parameter of the camera.

In the above-described overall operation, by causing the item representing the enlarged area not to be displayed in the LV area 320 on the main screen, deterioration in visibility of the main image displayed in the LV area 320 can be prevented. By displaying the item representing the enlarged area in the sub-LV area 330, the user can easily grasp the enlarged area. Also in the full-screen display mode, by displaying the item representing the enlarged area in the LV area 320, the user can easily grasp the enlarged area. The LV area 320 is large (on the full screen) in the full-screen display mode, and thus, even when the item representing the enlarged area is displayed, visibility of the main image displayed in the LV area 320 substantially does not deteriorate. As the marker can be suitably used to check a composition in the LV image displayed with a relatively large size, the marker is displayed in the LV area 320, but is not displayed in the sub-LV area 330.

In the overall operation of FIG. 7, the 2×2 display mode is not illustrated, and for example, the 2×2 display mode may be displayed the same as the main screen not including the LV display.

Hereinabove, although the embodiments of the present invention are described in detail, the present invention is not limited to the specific embodiments, and various forms in the range without departing from the gist of the invention shall also be encompassed by the present invention. Some of the above-described embodiments may be appropriately combined.

For example, in the above-described embodiments, when the enlarged display is executed in the LV area 320, the enlarged areas of all of the LV images in the sub-LV area 330 are identifiable, but the present invention is not limited thereto. When the enlarged display is executed in the LV area 320, whether to show the enlarged areas in the LV images other than the main image in the sub-LV area 330 to be identifiable may be settable.

In the above-described embodiments, the enlarged area of each of the LV images (each of the cameras) is individually set, but the present invention is not limited thereto. The enlarged areas of other LV images may change in response to a change in the enlarged area of the main image. For example, the enlarged area of each of the LV images may be set such that the position (relative position) and the size (relative size) of the enlarged area with respect to the entire LV image are the same between the LV images (between the cameras). Whether to link the enlarged areas of the LV images other than the main image with the enlarged area of the main image may be settable.

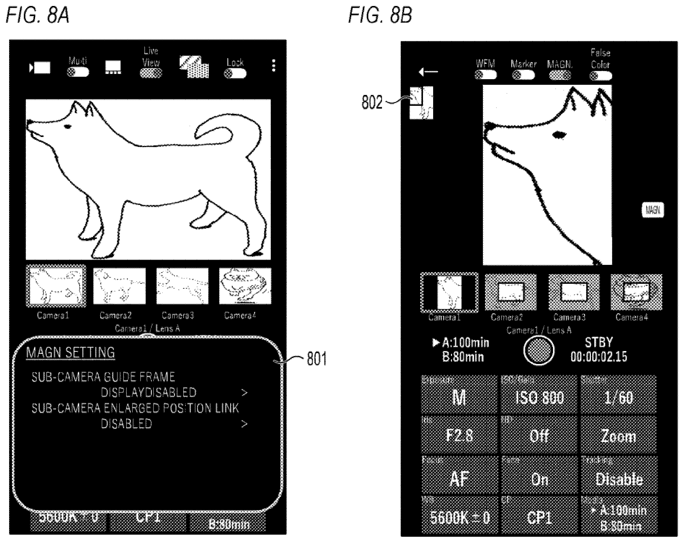

For example, a setting menu 801 illustrated in FIG. 8A may be displayed such that the user can designate (select) whether to make the enlarged areas of the LV images other than the main image identifiable or whether to link the enlarged areas of the LV images other than the main image with the enlarged area of the main image.

The enlarged area of the main image and the enlarged areas set for the LV images other than the main image may be made identifiable in different appearances. For example, frames having different color, luminance, or line type, or masks having different color, luminance, or transparency may be used.

As illustrated in FIG. 8B, due to a difference between an aspect ratio of the LV area 320 and an aspect ratio of the enlarged area of the main image, a margin including an area with a predetermined size (area where the item representing the enlarged area is displayable) may be generated in the LV area 320. Here, the item representing the enlarged area may be displayed in the margin. In FIG. 8B, a reduced-size image 802 where the enlarged area is identifiable by a frame may be displayed in the margin. However, the present invention is not limited thereto, and when the main image is a specific image, the item representing the enlarged area may be displayed in the LV area 320. The specific image is an image where deterioration in visibility caused by the item representing the enlarged area is allowable. For example, the specific image may be an image that has a low resolution and is difficult to check even in the enlarged display. The specific image may be an image such as a blue sky image where the number of objects is small and frequency of the enlarged display is low. When a background in the enlarged area includes an area with a predetermined size, the item representing the enlarged area may be displayed in the background.

An example where the present invention is applied to a case where LV images of a plurality of cameras are checked is described, but the present invention is also applicable to various other cases. For example, the present invention is also applicable to a case where a plurality of videos shot by a plurality of video cameras are stored in a recording medium and the plurality of videos are read from the recording medium and edited.

Note that the above-described various types of control may be processing that is carried out by one piece of hardware (e.g., processor or circuit), or otherwise. Processing may be shared among a plurality of pieces of hardware (e.g., a plurality of processors, a plurality of circuits, or a combination of one or more processors and one or more circuits), thereby carrying out the control of the entire device.

Also, the above processor is a processor in the broad sense, and includes general-purpose processors and dedicated processors. Examples of general-purpose processors include a central processing unit (CPU), a micro processing unit (MPU), a digital signal processor (DSP), and so forth. Examples of dedicated processors include a graphics processing unit (GPU), an application-specific integrated circuit (ASIC), a programmable logic device (PLD), and so forth. Examples of PLDs include a field-programmable gate array (FPGA), a complex programmable logic device (CPLD), and so forth.

The embodiment described above (including variation examples) is merely an example. Any configurations obtained by suitably modifying or changing some configurations of the embodiment within the scope of the subject matter of the present invention are also included in the present invention. The present invention also includes other configurations obtained by suitably combining various features of the embodiment.

According to the present invention, when a main image that is any of a plurality of images is displayed separately from the plurality of images, an enlarged area is identifiable while maintaining visibility of the main image that is enlarged and displayed.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An electronic device comprising:
acquisition means configured to acquire a plurality of images;
control means configured to perform control such that a first screen including a first area and a second area smaller than the first area is displayed, and perform control such that the plurality of images are simultaneously displayed in the second area and a main image that is one of the plurality of images is displayed in the first area; and
selection means configured to select the main image from the plurality of images displayed in the second area according to a user operation, wherein
in a case where enlarged display is instructed while displaying the first screen, the control means performs control such that an image of an enlarged area that is a part of the main image is displayed in the first area, an item representing a position of the enlarged area is not displayed in the first area, and the item representing the position of the enlarged area is displayed to be superimposed on the main image displayed in the second area.

2. The electronic device according to claim 1, wherein
the acquisition means acquires the plurality of images output from a plurality of devices.

3. The electronic device according to claim 2, wherein
each of the plurality of devices is a video camera, and
each of the plurality of images is a live view image.

4. The electronic device according to any one of claims 1 to 3, wherein
the item includes at least one of a frame that surrounds the enlarged area and a mask having a predetermined transparency that covers an outside area of the enlarged area in the main image.

5. The electronic device according to any one of claims 1 to 4, wherein
while displaying a second screen not including the first area and including the second area, the control means performs control such that the item is not displayed.

6. The electronic device according to any one of claims 1 to 5, wherein
in a case where the enlarged display is instructed while displaying a third screen not including the second area and including the first area having a larger size than a size of the first area on the first screen, the control means performs control such that the item is displayed to be superimposed on the main image displayed in the first area.

7. The electronic device according to claim 6, wherein
the item is a reduced-size image of the main image where the enlarged area is identifiable.

8. The electronic device according to claim 6 or 7, wherein
the third screen is a screen where the main image is displayed as a whole.

9. The electronic device according to any one of claims 6 to 8, wherein
on the first screen, a first operation area where a plurality of items for user operation are displayed, the first area, and the second area are longitudinally arranged, and
on the third screen, a second operation area where a part of a plurality of items for user operation are displayed is disposed in the first area.

10. The electronic device according to any one of claims 1 to 9, wherein
in a case where a guideline for checking a composition is instructed to be displayed while displaying the first screen, the control means performs control such that the guideline is not displayed in the second area and is displayed to be superimposed on the main image displayed in the first area.

11. The electronic device according to claim 10, wherein
the control means performs control such that the guideline is not displayed during the enlarged display.

12. The electronic device according to any one of claims 1 to 11, wherein
in a case where coloration is instructed while displaying the first screen, the control means performs control such that coloration is performed on the main image and a main image after coloration is displayed in both the first area and the second area.

13. The electronic device according to claim 12, wherein
even if the coloration is instructed during the enlarged display, the control means performs control such that coloration is performed on the main image.

14. The electronic device according to any one of claims 1 to 13, wherein
the control means performs control such that display means where a touch operation is receivable displays a screen, and
in response to a touch operation of touching one of the plurality of images displayed in the second area, the selection means selects the touched image as the main image.

15. The electronic device according to any one of claims 1 to 14, wherein
the control means performs control such that an icon representing that the enlarged display is being performed is displayed in the first area during the enlarged display.

16. The electronic device according to any one of claims 1 to 15, wherein
in a case where the enlarged display is instructed while displaying the first screen, the control means performs control such that regarding each of the plurality of images displayed in the second area, an item representing a position of an enlarged area set for this image is displayed to be superimposed on this image.

17. The electronic device according to any one of claims 1 to 15, wherein
in a case where the item is displayed to be superimposed on the main image displayed in the second area, regarding an image other than the main image among the plurality of images displayed in the second area, whether to display an item representing a position of an enlarged area set for the image to be superimposed on the image is settable.

18. The electronic device according to claim 16 or 17, wherein
an appearance of an item representing a position of an enlarged area set for an image other than the main image among the plurality of images displayed in the second area is different from an appearance of the item representing a position of an enlarged area set for the main image.

19. The electronic device according to any one of claims 1 to 18, wherein
whether to link an enlarged area set for an image other than the main image among the plurality of images with an enlarged area set for the main image is settable.

20. The electronic device according to any one of claims 1 to 19, wherein
even if the enlarged display is instructed while displaying the first screen, in a case where the main image is a specific image, the control means performs control such that the item is displayed in the first area.

21. The electronic device according to any one of claims 1 to 20, wherein
even if the enlarged display is instructed while displaying the first screen, in a case where a margin larger than a predetermined size is generated in the first area due to a difference between an aspect ratio of the first area and an aspect ratio of the enlarged area, the control means performs control such that the item is displayed in the margin.

22. A control method of an electronic device, comprising:
an acquisition step of acquiring a plurality of images;
a control step of performing control such that a first screen including a first area and a second area smaller than the first area is displayed, and performing control such that the plurality of images are simultaneously displayed in the second area and a main image that is one of the plurality of images is displayed in the first area; and
a selection step of selecting the main image from the plurality of images displayed in the second area according to a user operation, wherein
in a case where enlarged display is instructed while displaying the first screen, in the control step, control is performed such that an image of an enlarged area that is a part of the main image is displayed in the first area, an item representing a position of the enlarged area is not displayed in the first area, and the item representing the position of the enlarged area is displayed to be superimposed on the main image displayed in the second area.

23. A program that causes a computer to function as each means of the electronic device according to any one of claims 1 to 16.

24. A computer readable medium storing a program that causes a computer to function as each means of the electronic device according to any one of claims 1 to 16.
